(19)

Europäisches
Patentamt

European
Patent Office

Office européen
des brevets

(11) **EP 4 514 028 A1**

(12) **EUROPEAN PATENT APPLICATION**
published in accordance with Art. 153(4) EPC

(43) Date of publication:
26.02.2025 Bulletin 2025/09

(21) Application number: 22938579.4

(22) Date of filing: 22.04.2022

(51) International Patent Classification (IPC):
*H04W 72/1268* (2023.01)    *H04W 72/0457* (2023.01)
*H04W 72/566* (2023.01)    *H04W 88/08* (2009.01)

(52) Cooperative Patent Classification (CPC):
H04W 72/0457; H04W 72/1268; H04W 72/566;
H04W 88/08

(86) International application number:
PCT/JP2022/018627

(87) International publication number:
WO 2023/203780 (26.10.2023 Gazette 2023/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Tokyo 100-6150 (JP)

(72) Inventors:
• TAKAHASHI, Yuki
Tokyo 100-6150 (JP)

• KUMAGAI, Shinya
Tokyo 100-6150 (JP)
• YOSHIOKA, Shohei
Tokyo 100-6150 (JP)
• OKAMURA, Masaya
Tokyo 100-6150 (JP)
• OKANO, Mayuko
Tokyo 100-6150 (JP)
• NAGATA, Satoshi
Tokyo 100-6150 (JP)

(74) Representative: Hoffmann Eitle
Patent- und Rechtsanwälte PartmbB
Arabellastraße 30
81925 München (DE)

(54) **TERMINAL, BASE STATION, AND COMMUNICATION METHOD**

(57)    A terminal includes a communication unit configured to perform uplink or downlink communication in a frequency band aggregated by carrier aggregation, a reception unit configured to receive a cancelation indication for an uplink signal in downlink, and a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

FIG.12

EP 4 514 028 A1

**Description**

Technical Field

The present invention relates to a terminal, a base station, and a communication method in a wireless communication system.

Background Art

In New Radio (NR) (also referred to as "5G"), which is a succeeding system of Long Term Evolution (LTE), a technology that satisfies a large-capacity system, a highspeed data transmission speed, a low delay, simultaneous connection of a large number of terminals, a low cost, power saving, and the like as requirement conditions has been studied (for example, Non Patent Literature 1).
In addition, in the NR, a carrier aggregation (CA) function that uses a broadband to secure data resources is being studied continuously following the LTE. In the carrier aggregation function, a plurality of component carriers (CC) is bundled, so that a broadband data resource can be secured.

Citation List

Non Patent Literature

Non Patent Literature 1: 3GPP TS 38.300 V16.8.0 (2021-12)

Summary of Invention

Technical Problem

More flexible and efficient resource allocation may be required in future systems (for example, NR Release 18 and 6G which is a successor system of NR). However, in a conventional carrier aggregation function, it is necessary to schedule a data resource for each of a plurality of bundled component carriers, and there is a problem that resource allocation overhead is large.
The present invention has been made in view of the above points, and an object thereof is to reduce resource allocation overhead.

Solution to Problem

According to the disclosed technology, there is provided a terminal including a communication unit configured to perform uplink or downlink communication in a frequency band aggregated by carrier aggregation, a reception unit configured to receive a cancelation indication for an uplink signal in downlink, and a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

Advantageous Effects of Invention

According to the disclosed technology, there is provided a technology capable of reducing resource allocation overhead.

Brief Description of Drawings

[Fig. 1] Fig. 1 is a diagram for describing a wireless communication system according to the embodiment of the present invention.
[Fig. 2] Fig. 2 is a first diagram illustrating an example of a configuration of a virtual CC according to the embodiment of the present invention.
[Fig. 3] Fig. 3 is a second diagram illustrating an example of a configuration of the virtual CC according to the embodiment of the present invention.

[Fig. 4] Fig. 4 is a diagram for describing an outline of a conventional uplink cancelation indication.

[Fig. 5] Fig. 5 is a diagram for describing cancelation timing in the conventional uplink cancelation indication.

[Fig. 6] Fig. 6 is a diagram for describing a bit structure of an uplink cancelation indication.

[Fig. 7] Fig. 7 is a diagram illustrating an example of a conventional delay period of BWP switching.

[Fig. 8] Fig. 8 is a first diagram illustrating an example of the conventional uplink cancelation indication.

[Fig. 9] Fig. 9 is a second diagram illustrating an example of the conventional uplink cancelation indication.

[Fig. 10] Fig. 10 is a third diagram illustrating an example of the conventional uplink cancelation indication.

[Fig. 11] Fig. 11 is a diagram for describing Option 1 of the third example of the embodiment of the present invention.

[Fig. 12] Fig. 12 is a diagram for describing Option 2 of the third example of the embodiment of the present invention.

[Fig. 13] Fig. 13 is a diagram illustrating an example of a functional configuration of a base station according to the embodiment of the present invention.

[Fig. 14] Fig. 14 is a diagram illustrating an example of a functional configuration of a terminal according to the embodiment of the present invention.

[Fig. 15] Fig. 15 is a diagram illustrating an example of a hardware configuration of the base station or the terminal according to the embodiment of the present invention.

[Fig. 16] Fig. 16 is a diagram illustrating an example of a configuration of a vehicle according to the embodiment of the present invention.

Description of Embodiments

Hereinafter, embodiments of the present invention will be described with reference to the drawings. Note that the embodiment described below is an example, and the embodiment to which the present invention is applied is not limited to the following embodiment.

In the operation of the wireless communication system of the embodiment of the present invention, an existing technology is appropriately used. However, the existing technology is, for example, existing LTE, but is not limited to existing LTE. In addition, the term "LTE" used in the present specification has a broad meaning including LTE-Advanced and a system after LTE-Advanced (for example, NR) unless otherwise specified.

In the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in existing LTE are used. This is for convenience of description, and similar signals, functions, and the like may be referred to by other names. In addition, the above-described term in NR corresponds to NR-SS, NR-PSS, NR-SSS, NR-PBCH, NR-PRACH, and the like. However, even a signal used for NR is not necessarily specified as "NR-".

In the exemplary embodiment of the present invention, a duplex system may be a time division duplex (TDD) system, a frequency division duplex (FDD) system, or other (for example, flexible duplex or the like) systems.

In addition, in the embodiment of the present invention, the wireless parameter and the like is "configured" may mean that a predetermined value is pre-configured, or that the wireless parameter notified from a base station 10 or a terminal 20 is configured.

(System configuration)

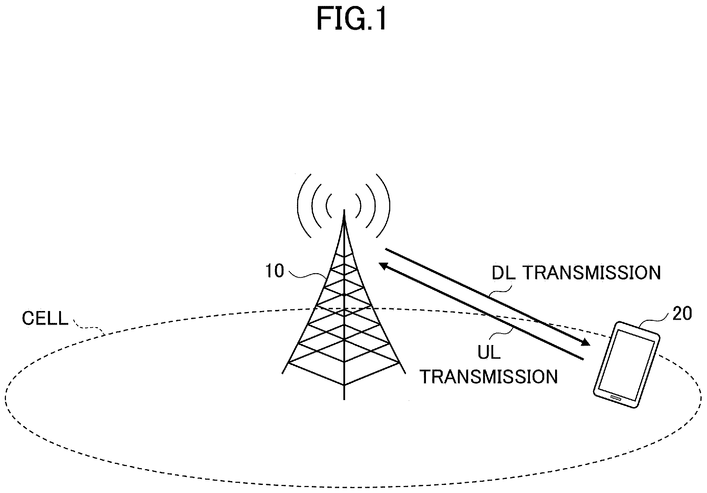

Fig. 1 is a diagram for describing a wireless communication system according to the embodiment of the present invention. As illustrated in Fig. 1, the wireless communication system according to the embodiment of the present invention includes the base station 10 and the terminal 20. Although one base station 10 and one terminal 20 are illustrated in Fig. 1, this is an example, and a plurality of base stations 10 and a plurality of terminals 20 may be provided.

The base station 10 is a communication device that provides one or more cells and performs wireless communication with the terminal 20. The physical resources of the wireless signal are defined in a time domain and a frequency domain, the time domain may be defined by the number of orthogonal frequency division multiplexing (OFDM) symbols, and the frequency domain may be defined by the number of subcarriers or the number of resource blocks. In addition, a transmission time interval (TTI) in the time domain may be a slot, or the TTI may be a subframe.

The base station 10 transmits a synchronization signal and system information to the terminal 20. The synchronization signal is, for example, an NR-PSS and an NR-SSS. The system information is transmitted through, for example, the NR-PBCH and is also referred to as notification information. The synchronization signal and the system information may be referred to as an SS/PBCH block (SSB). As illustrated in Fig. 1, the base station 10 transmits a control signal or data to the terminal 20 in downlink (DL) and receives a control signal or data from the terminal 20 in uplink (UL). Both the base station 10 and the terminal 20 can transmit and receive signals by performing beamforming. In addition, both the base station 10 and the terminal 20 can apply communication based on a multiple input multiple output (MIMO) to the DL or the UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell) of another base station 10 by dual connectivity (DC).

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by the wireless communication system by receiving a control signal or data from the base station 10 in DL and transmitting the control signal or data to the base station 10 in UL. In addition, the terminal 20 receives various reference signals transmitted by the base station 10 and measures the propagation path quality based on the reception result of the reference signals. Note that the terminal 20 may be referred to as a UE, and the base station 10 may be referred to as a gNB.

In addition, in the NR, a carrier aggregation function that uses broadband to secure data resources is being studied continuously following the LTE. In the carrier aggregation function, a plurality of component carriers is bundled, so that a broadband data resource can be secured.

(Conventional problem)

In a conventional carrier aggregation function, a data resource is required to be scheduled for each of a plurality of bundled component carriers, and there is a problem that resource allocation overhead is large.

Therefore, in order to solve the above-described conventional problem, it is conceivable that the terminal performs resource allocation in a scheduling unit having a granularity different from that of the component carrier.

A framework that performs scheduling or aggregation at a granularity different from that of the component carrier is defined as frequency fragmentation.

In addition, in the carrier aggregation, aggregation of a granularity different from that of the component carrier is defined as non-continuous carrier aggregation.

In addition, in carrier aggregation (non-continuous carrier aggregation), performing scheduling at a granularity different from that of the component carrier is defined as non-continuous scheduling.

The granularity different from that of the component carrier described above may be a virtual CC unit, a bandwidth part (BWP) unit, a physical resource block (PRB) unit, or a PRB set unit.

Here, the virtual CC is a carrier set in which all or some of frequency resources included in each component carrier among a plurality of component carriers is bundled.

For example, it may be assumed that the virtual CC includes a plurality of BWPs.

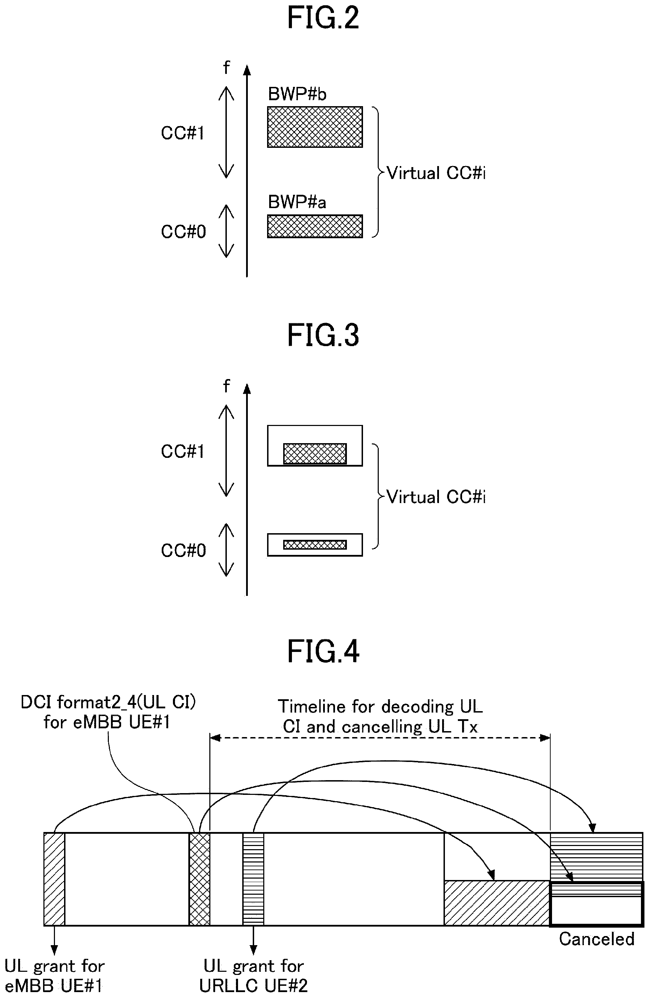

Fig. 2 is a first diagram illustrating an example of a configuration of a virtual CC according to the embodiment of the present invention. The virtual CC#i illustrated in Fig. 2 is a carrier set in which the BWP#a and the BWP#b included in the respective component carriers among a plurality of component carriers (CC#0 and CC#1) are bundled.

In addition, it may be assumed that the virtual CC includes a plurality of PRBs or PRB sets.

Fig. 3 is a second diagram illustrating an example of a configuration of the virtual CC according to the embodiment of the present invention. The virtual CC#i illustrated in Fig. 3 is a carrier set in which a plurality of PRBs included in the respective component carriers among a plurality of component carriers is bundled (CC#0 and CC#1). Note that the plurality of PRBs or the PRB set may be included in one or a plurality of BWPs.

Hereinafter, a CC before bundling is referred to as an actual CC, and a CC after bundling is referred to as a virtual CC or a nominal CC. Note that the names are not limited thereto.

(Conventional uplink cancelation indication)

Next, a conventional uplink cancelation indication (UL-CI) will be described. DCI format 2_4 for canceling uplink transmission is introduced in NR Release 16 to occupy resources with higher priority uplink transmission.

The PUSCH and the SRS are canceled by an uplink cancelation indication (UL-CI; DCI format 2_4). Also, which uplink transmission priorities are canceled is configured by RRC. For example, it is configured from any of 1) a case where the priority is high and a case where the priority is low, or 2) a case where the priority is low.

Fig. 4 is a diagram for describing an overview of a conventional uplink cancelation indication. For example, in a case where the uplink transmission of the UE#2 that is the URLLC terminal and the uplink transmission of the UE#1 that is the eMBB terminal overlap, the base station 10 notifies the UE#1 that is the eMBB terminal of the UL-CI according to the priority setting. When the UL-CI is notified from the base station 10, the UE#1 cancels the uplink transmission after the elapse of the timeline necessary for decoding the DCI.

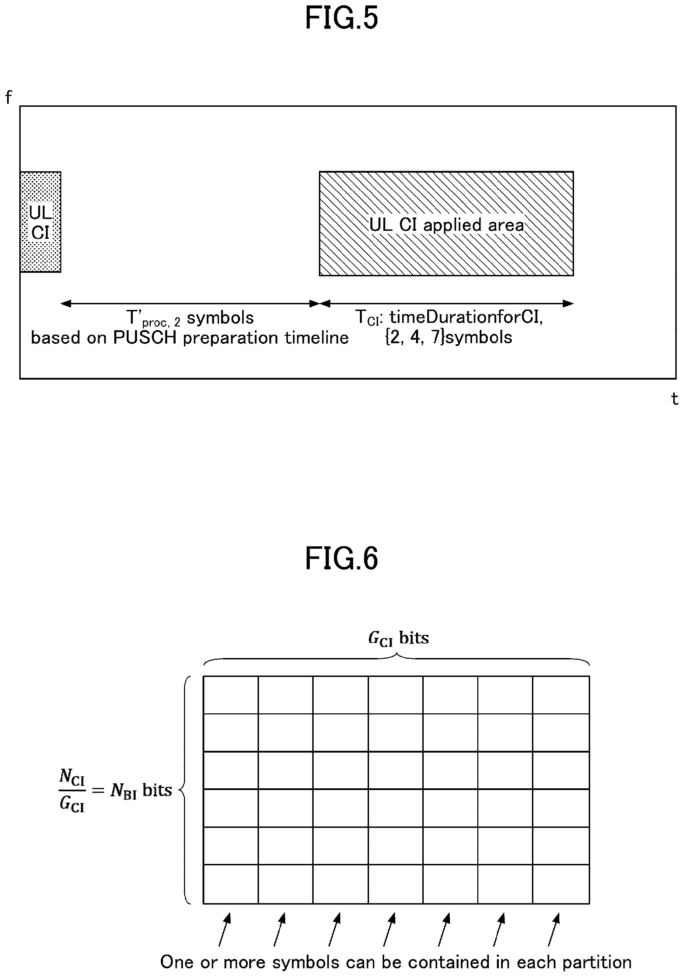

Fig. 5 is a diagram for describing cancelation timing in a conventional uplink cancelation indication. The terminal 20 cancels uplink transmission for TCI (timedurationfocCI, {2, 4, 7}) symbols after $T'_{porc,2}$ symbols or more from the terminal symbol of UL-CI. That is, the UL-CI can designate only the uplink signals after $T'_{porc,2}$ symbols or more as the cancelation target. The $T'_{porc,2}$ symbol is determined based on the PUSCH preparation timeline.

Fig. 6 is a diagram for describing a bit structure of an uplink cancelation indication. UL-CI has a structure of $G_{CI}$ bits in time domain $\times$ $N_{BI}$ bits in frequency domain. The $N_{CI}$ is designated by a parameter "CI-PayloadSize", and means the payload size of the entire UL-CI. The $G_{CI}$ is designated by a parameter "timeGranularityforCI" and is selected from any value of $\{1, 2, 4, 7, 14, 28\}$. From these designations, the bit length in the frequency domain is determined by $N_{BI} = N_{CI} / G_{CI}$. For example, Fig. 6 illustrates an example in a case where $G_{CI} = 7$ and $N_{BI} = 6$.

The $T_{CI}$ is designated by a parameter "timeDurationforCI" and is selected from any value of $\{2, 4, 7\}$. The $T_{CI}$ is the size of the time domain to be canceled. The $B_{CI}$ is designated by a parameter "frequencyRegionforCI". The $B_{CI}$ is the size of the frequency domain to be canceled. Each bit value is an indication for a partition that includes one or more symbols.

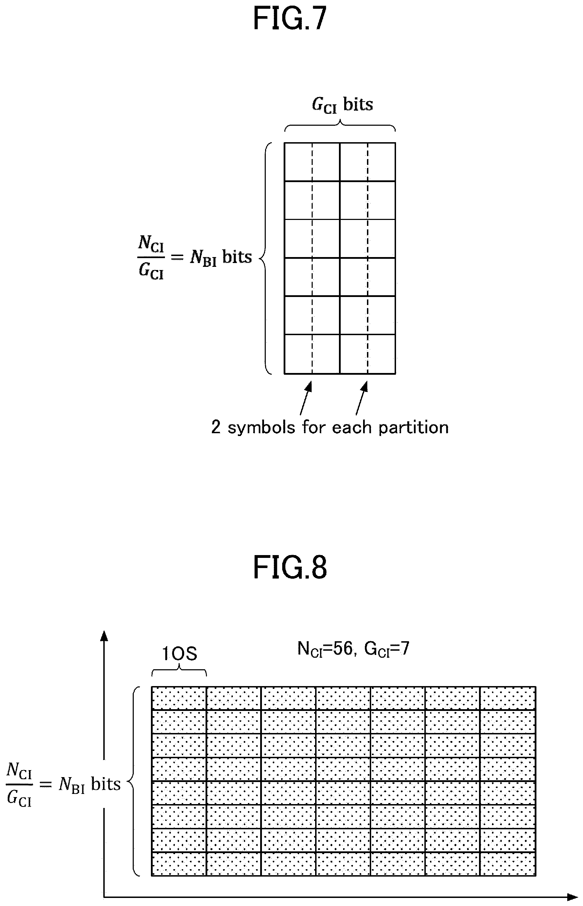

Fig. 7 is a diagram for describing a partition of an uplink cancelation indication. Fig. 7 shows an example where one bit is an indication for a partition including two symbols.

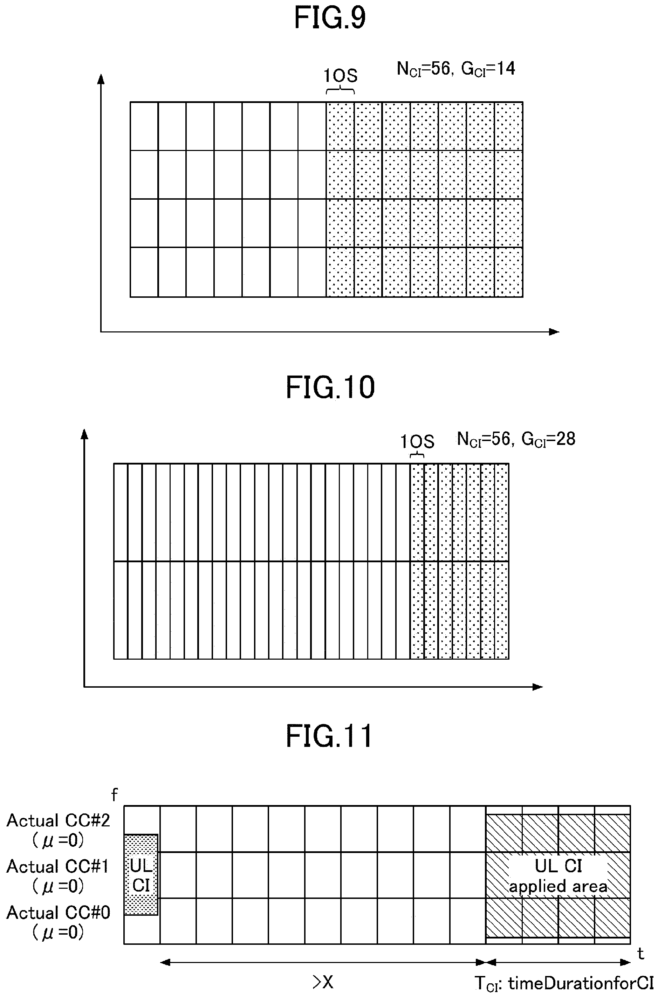

Figs. 8 to 10 are diagrams each illustrating an example of an uplink cancelation indication. The size of the frequency domain of each partition is adjusted by $G_{CI}$. Fig. 8 illustrates a case where $N_{CI} = 56$ and $G_{CI} = 7$. Fig. 9 illustrates a case where $N_{CI} = 56$ and $G_{CI} = 14$. Fig. 10 illustrates a case where $N_{CI} = 56$ and $G_{CI} = 28$. For example, in a case where the $B_{CI}$ is the same value, the size of the frequency domain of each partition increases as the value of the $G_{CI}$ increases.

For the uplink cancelation indication, in a case where frequency fragmentation is applied, the following two cases are assumed. Case 1 is a case where the SCSs of the actual CCs constituting the virtual CC are the same. Case 2 is a case where the SCSs of the actual CCs constituting the virtual CC are different from each other.

In both cases, it is necessary to consider a method of determining a frequency resource to be canceled in the uplink cancelation indication.

In addition, in Case 2, it is necessary to consider a method of determining a time resource to be canceled in the uplink cancelation indication. Note that, in Case 1, a conventional method can be applied.

(Outline of present embodiment)

Therefore, in the present embodiment, a method of an uplink cancelation indication in frequency fragmentation will be described. Hereinafter, the first example to the third example will be described as specific examples.

(First example)

In the present embodiment, whether to apply the uplink cancelation indication will be described.

<Option 1>

The terminal 20 may assume that the uplink cancelation indication is not supported by the virtual CC.

In a case where the terminal 20 supports the virtual CC and/or the virtual CC is configured in the terminal 20, the terminal 20 may perform an operation according to any of the following proposals.

<Proposal 1>

The terminal 20 may assume that the UL-CI is not enabled or notified for all the CCs regardless of whether the CC is a CC (that is, the actual CC) included in the virtual CC.

<Proposal 2>

The terminal 20 may assume that the UL-CI is not enabled or notified for a CC (that is, the actual CC) included in the virtual **CC.**

<Proposal 3>

The terminal 20 may assume that the UL-CI is not enabled or notified for the virtual **CC.**

<Option 2>

The terminal 20 may assume that the uplink cancelation indication is supported by the virtual **CC.**

In a case where the terminal 20 supports the virtual CC and/or the virtual CC is configured in the terminal 20, the terminal 20 may perform an operation according to any of the following proposals.

<Proposal 1>

The terminal 20 may assume that the UL-CI is enabled or notified for all CCs regardless of whether the CC is a CC (that is, the actual CC) included in the virtual **CC.**

<Proposal 2>

The terminal 20 may assume that UL-CI is enabled or notified for a CC (that is, the actual CC) included in the virtual CC.

<Proposal 3>

The terminal 20 may assume that the UL-CI is enabled or notified for the virtual **CC.**
Note that a frequency resource determination method and a time resource determination method to be canceled are illustrated in the second example and the third example, respectively.
According to the present embodiment, whether to apply the uplink cancelation indication can be appropriately set.

(Second example)

In the present embodiment, a method of determining a frequency resource to be canceled will be described.

<Option 1>

The terminal 20 may assume that uplink cancelation is indicated for each actual **CC.**
The terminal 20 may determine the frequency resource area to be canceled in units of actual CCs based on any or a combination of the following.

· BWP size of actual CC
· RIV
· Parameter indicating the number of frequency resources to be canceled (for example, parameter "frequencyRegionforCI" set for each actual CC, the value of "frequencyRegionforCI" may be {0, 1, ..., X}, and X may be 37949)
· Bit mapping (Correspondence between a frequency resource, for example, a PRB, and a bit of a notification field)

Note that the RIV is determined by the following expression.

[Math 1]

$$\text{if } (L_{RBs} - 1) \le \left\lfloor N_{BWP}^{size}/2 \right\rfloor \text{ then}$$

$$RIV = N_{BWP}^{size}(L_{RBs} - 1) + RB_{start}$$

$$\text{else}$$

$$RIV = N_{BWP}^{size}\left(N_{BWP}^{size} - L_{RBs} + 1\right) + \left(N_{BWP}^{size} - 1 - RB_{start}\right)$$

<Example 1>

The terminal 20 may determine the frequency resource area by combining all the parameters described above. For example, the terminal 20 may obtain $RB_{start}$ and $L_{RBs}$ with $N_{BWP}^{size}$ as the BWP size of the actual CC, and RIV as the value set in "frequencyRegionforCI" in the above-described RIV derivation formula. Here, $RB_{start}$ may mean the start PRB of the frequency resource to be canceled, and $L_{RBs}$ may mean the length (the number of PRBs) of the frequency resource to be canceled.

<Example 2>

The terminal 20 may determine the frequency resource area only based on the BWP size of the actual CC. For example, the terminal 20 may set the entire BWP of the actual CC as the frequency resource to be canceled.

<Example 3>

The terminal 20 may determine the frequency resource area based on the BWP size and the bit mapping of the actual CC. For example, in a case where half of the total number of PRBs constituting the BWP for the actual CC corresponds to one bit, the terminal 20 may change whether the entire BWP is to be canceled or half of the BWP is to be canceled by bit designation.

For example, the bit string '10' may be an indication to cancel only the first half, the bit string '01' may be an indication to cancel only the second half, and the bit string '11' may be an indication to cancel the entirety.

<Option 2>

The terminal 20 may assume that uplink cancelation is indicated for each virtual CC.

The terminal 20 may determine the frequency resource area to be canceled in units of virtual CCs based on any or a combination of the following.

· BWP size of virtual CC
· RIV
· Parameter indicating the number of frequency resources to be canceled (for example, parameter "frequencyRegionforCIforVCC" set for each virtual CC, the value of "frequencyRegionforCIforVCC" may be {0, 1, ..., X}, X may be 37949 * i, and i may mean the number of actual CCs constituting the virtual CC in which the BWP is configured)
· Bit mapping (Correspondence between a frequency resource, for example, a PRB, and a bit of a notification field)

<Example 1>

The terminal 20 may determine the frequency resource area by combining all the parameters described above. For example, the terminal 20 may obtain $RB_{start}$ and $L_{RBs}$ with $N_{BWP}^{size}$ as the BWP size of the actual CC, and RIV as the value set in "frequencyRegionforCI" in the above-described RIV derivation formula. Here, $RB_{start}$ may mean the start PRB of the frequency resource to be canceled, and $L_{RBs}$ may mean the length (the number of PRBs) of the frequency resource to be canceled.

<Example 2>

The terminal 20 may determine the frequency resource area based on only the BWP size of the virtual CC. For example, the terminal 20 may set the entire BWP of the virtual CC as the frequency resource to be canceled.

<Example 3>

The terminal 20 may determine the frequency resource area based on the BWP size and the bit mapping of the virtual CC. For example, in a case where half of the total number of PRBs constituting the BWP of the virtual CC corresponds to one bit, the terminal 20 may change whether the entire BWP is to be canceled or half of the BWP is to be canceled by bit designation.

For example, the bit string '10' may be an indication to cancel only the first half, the bit string '01' may be an indication to cancel only the second half, and the bit string '11' may be an indication to cancel the entirety.

Note that the terminal 20 may assume that different options are applied to Case 1 and Case 2.

According to the present embodiment, the frequency resource to be canceled in the uplink cancelation indication can be appropriately determined.

(Third example)

In the present embodiment, a method of determining a time resource to be canceled will be described.

<Option 1>

The terminal 20 may determine the time resource area to be canceled based on any or a combination of the following.

· Upper layer parameter (for example, "timeDurationforCI", the unit may be a time unit such as a symbol, a slot, a subframe, a frame, or a millisecond, for example, it may include symbols of {2, 4, 7} in length)
· Bit mapping (a correspondence between time resources and bits of a notification field, for example, one bit corresponds to every one, two, or four symbols)

Fig. 11 is a diagram for describing Option 1 of the third example of the embodiment of the present invention. The terminal 20 may assume that a timeline for applying an uplink cancelation indication is introduced. For example, as shown in Fig. 11, the terminal 20 may assume that the UL-CI in which the time from the end of the UL-CI to the start of the UL-CI application area is X symbols, slots, subframes, frames, or milliseconds or less is not transmitted.

The terminal 20 may assume that Option 1 is applied to Case 1.

<Option 2>

The terminal 20 may determine the time resource area to be canceled based on any or a combination of the following.

· Upper layer parameter (for example, "timeDurationforCIforVCC", the unit may be a time unit such as a symbol, a slot, a subframe, a frame, or a millisecond, for example, it may include symbols of {2, 4, 7} in length)
· Bit mapping (a correspondence between time resources and bits of a notification field, for example, one bit corresponds to every one, two, or four symbols)

A reference SCS for a symbol or slot may be defined in association with the time resource to be canceled. The reference SCS may be a minimum value, a maximum value, or an average value of the SCS of the actual CC, a default value may be defined in a specification, or may be set by an upper layer parameter. The terminal 20 may determine the time resource to be canceled based on the reference SCS.

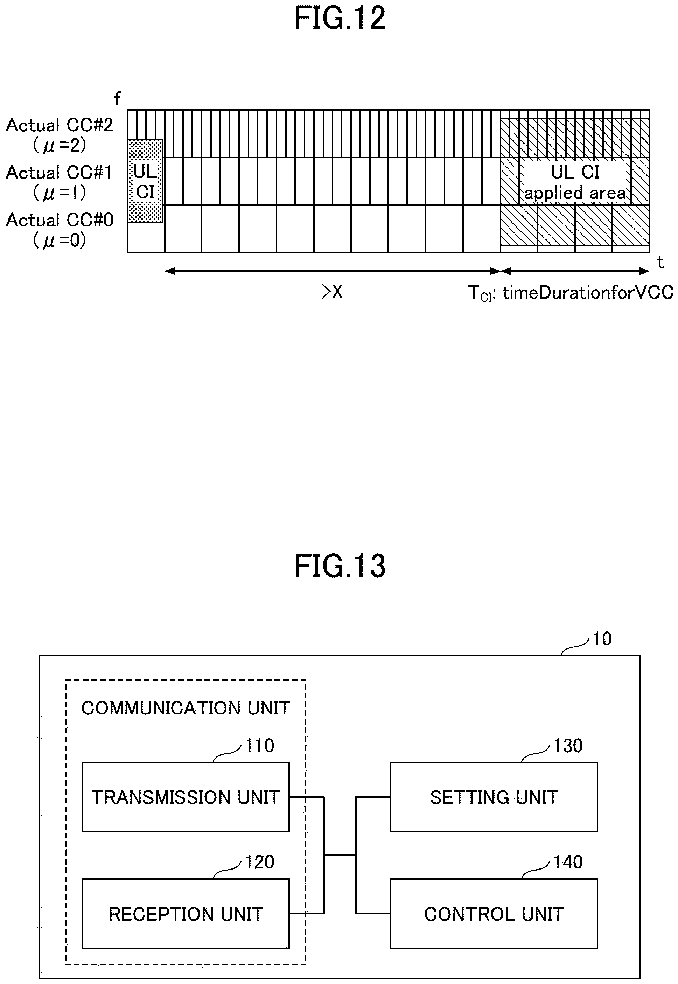

Fig. 12 is a diagram for describing Option 2 of the third example of the embodiment of the present invention. For example, in a case where the SCSs (or corresponding numerologies) of the actual CCs are different from each other (the actual CC#0 is $\mu = 0$, the actual CC#1 is $\mu = 1$, and the actual CC#2 is $\mu = 2$), and the reference SCS is a minimum value of the actual CC, then the reference SCS is $\mu = 0$. In this case, when "timeDurationforCIforVCC" is set to four symbols, as illustrated in Fig. 12, the time resources to be canceled of the actual CC#0, the actual CC#1, and the actual CC#2 are four symbols, eight symbols, and sixteen symbols, respectively.

The terminal 20 may assume that a timeline for applying an uplink cancelation indication is introduced. For example, as shown in Fig. 12, the terminal 20 may assume that the UL-CI in which the time from the end of the UL-CI to the start of the UL-CI application area is X symbols, slots, subframes, frames, or milliseconds or less is not transmitted.

A reference SCS for a symbol or slot may be defined. The reference SCS may be a minimum value, a maximum value, or an average value of the SCS of the actual CC, a default value may be defined in a specification, or may be set by an upper layer parameter. The terminal 20 may determine the timeline based on the reference SCS.

According to the present embodiment, the frequency resource to be canceled in the uplink cancelation indication can be appropriately determined.

(Device configuration)

Next, functional configuration examples of the base station 10 and the terminal 20 that execute the processes and operations described above will be described.

<Base station 10>

Fig. 13 is a diagram illustrating an example of a functional configuration of the base station 10. As illustrated in Fig. 13, the base station 10 includes a transmission unit 110, a reception unit 120, a setting unit 130, and a control unit 140. The functional configuration illustrated in Fig. 13 is merely an example. As long as the operation according to the embodiment of the present invention can be executed, the name of the functional classification and the functional unit may be any name. Furthermore, the transmission unit 110 and the reception unit 120 may be collectively referred to as a communication unit.

The transmission unit 110 has a function of generating a signal to be transmitted to the terminal 20 and wirelessly transmitting the signal. The reception unit 120 has a function of receiving various signals transmitted by the terminal 20 and acquiring, for example, information about a higher layer from the received signals. In addition, the transmission unit 110 has a function of transmitting NR-PSS, NR-SSS, NR-PBCH, DL/UL control signals, DCI by PDCCH, data by PDSCH, and the like to the terminal 20.

The setting unit 130 stores setting information set in advance and various types of setting information to be transmitted to the terminal 20 in a storage device included in the setting unit 130, and reads the information from the storage device as necessary.

The control unit 140 schedules DL reception or UL transmission of the terminal 20 via the transmission unit 110. Furthermore, the control unit 140 includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

<Terminal 20>

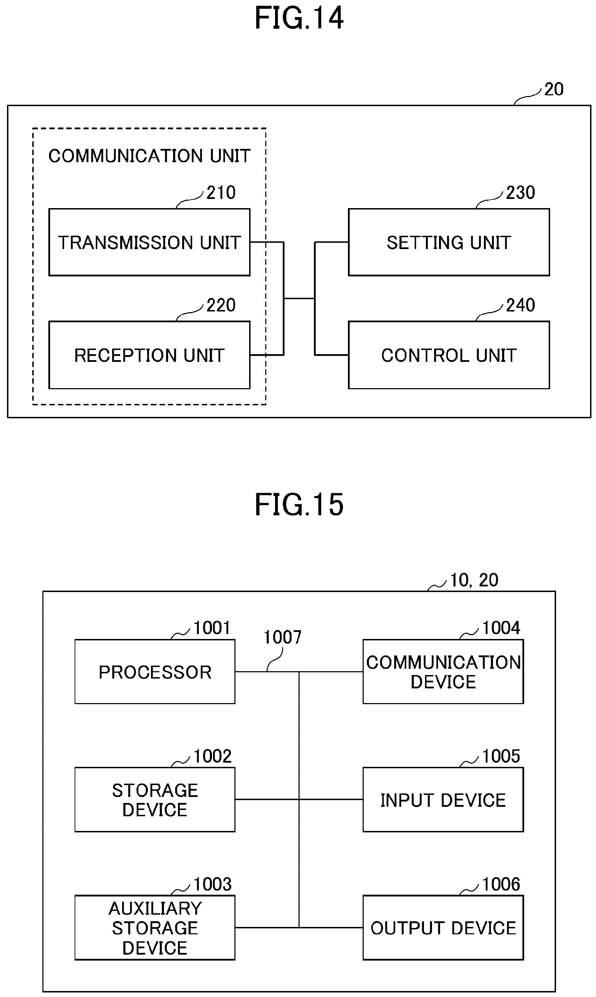

Fig. 14 is a diagram illustrating an example of a functional configuration of the terminal 20. As illustrated in Fig. 14, the terminal 20 includes a transmission unit 210, a reception unit 220, a setting unit 230, and a control unit 240. The functional configuration illustrated in Fig. 14 is merely an example. As long as the operation according to the embodiment of the present invention can be executed, the name of the functional classification and the functional unit may be any name. The transmission unit 210 and the reception unit 220 may be collectively referred to as a communication unit.

The transmission unit 210 creates a transmission signal from the transmission data and wirelessly transmits the transmission signal. The reception unit 220 wirelessly receives various signals and acquires a signal of a higher layer from the received signal of the physical layer. In addition, the reception unit 220 has a function of receiving NR-PSS, NR-SSS, NR-PBCH, DL/UL/SL control signals, DCI by PDCCH, data by PDSCH, and the like transmitted by the base station 10. Furthermore, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), and the like as the D2D communication to another terminal 20, and the reception unit 120 may receive the PSCCH, the PSSCH, the PSDCH, the PSBCH, and the like from another terminal 20.

The setting unit 230 stores various types of setting information received from the base station 10 or another terminal by the reception unit 220 in a storage device included in the setting unit 230, and reads the information from the storage device as necessary. The setting unit 230 also stores setting information set in advance. The control unit 240 controls the terminal 20. In addition, the control unit 240 includes a function of performing LBT.

The terminal of the present embodiment may be configured as a terminal described in each of the following Clauses. In addition, the following communication method may be implemented.

<Configuration according to present embodiment>

(Clause 1) A terminal including:

a communication unit configured to perform uplink or downlink communication in a frequency band aggregated by carrier aggregation;
a reception unit configured to receive a cancelation indication for an uplink signal in downlink; and
a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

(Clause 2) The terminal according to clause 1, wherein the control unit is configured to determine a frequency resource area to be canceled for each of the plurality of component carriers or for the unit including the plurality of component carriers.

(Clause 3) The terminal according to Clause 1 or 2, wherein the control unit is configured to determine a time resource area to be canceled for each of the plurality of component carriers or for the unit including the plurality of component carriers.

(Clause 4) A base station including:

a communication unit configured to perform communication with a terminal in a frequency band aggregated by carrier aggregation;
a transmission unit configured to transmit a cancelation indication for an uplink signal to the terminal; and
a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

(Clause 5) A communication method executed by a terminal, the method including steps of:

performing uplink or downlink communication in a frequency band aggregated by carrier aggregation;
receiving a cancelation indication for an uplink signal in downlink; and
assuming that, in a case where scheduling is performed in a unit including a plurality of component carriers in the aggregated frequency band, the cancelation indication for the uplink signal is transmitted for each of the plurality of component carriers or for the unit including the plurality of component carriers.

Any of the above configurations provides a technique capable of reducing resource allocation overhead. According to Clause 1, it can be assumed that the cancelation indication for the uplink signal is transmitted for each of a plurality of component carriers or for the unit including the plurality of component carriers. According to Clause 2, the frequency resource area to be canceled can be determined for each of a plurality of component carriers or for the unit including the plurality of component carriers. According to Clause 3, the time resource area to be canceled can be determined for each of the plurality of component carriers or for the unit including the plurality of component carriers.

(Hardware configuration)

The block diagrams (Figs. 13 and 14) used for the description of the above embodiment illustrate blocks of functional units. These functional blocks (configuration units) are realized by an any combination of at least one of hardware and software. A method of realizing each functional block is not particularly limited. That is, each functional block may be realized by using one physically or logically combined device, or may be realized by directly or indirectly (for example, by using wired, wireless, or the like) connecting two or more physically or logically separated devices and using a plurality of these devices. The functional block may be realized by combining software with the one device or the plurality of devices.

The functions include, but are not limited to, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that has a function of transmission is referred to as a transmission unit or a transmitter. In any case, as described above, the implementation method is not particularly limited.

For example, the base station 10, the terminal 20, and the like in an embodiment of the present disclosure may function as a computer that performs a process of the wireless communication method of the present disclosure. Fig. 15 is a diagram illustrating an example of a hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a unit, or the like. The hardware configuration of the base station 10 and the terminal 20 may be configured to include one or more devices illustrated in the figure, or may be configured without including some devices.

Each function in the base station 10 and the terminal 20 is implemented by the processor 1001 performing operation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be realized by the processor 1001.

In addition, the processor 1001 reads a program (program code), a software module, data, or the like from at least one of the auxiliary storage device 1003 and the communication device 1004 to the storage device 1002, and executes various processes according to the data. As the program, a program that causes a computer to execute at least part of the operations described in the above-described embodiments is used. For example, the control unit 140 of the base station 10 illustrated in Fig. 13 may be realized by a control program stored in the storage device 1002 and operated by the processor 1001. Furthermore, for example, the control unit 240 of the terminal 20 illustrated in Fig. 14 may be realized by a control program stored in the storage device 1002 and operated by the processor 1001. Although it is described that the above-described various processes are executed by one processor 1001, the various processes may be executed simultaneously or sequentially by two or more processors 1001. The processor 1001 may be implemented by one or more chips. The program may be transmitted from a network via an electric communication line.

The storage device 1002 is a computer-readable recording medium, and may include, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (main storage device), or the like. The storage device 1002 can store a program (program code), a software module, and the like that can be executed to implement the communication method according to an embodiment of the present disclosure.

The auxiliary storage device 1003 is a computer-readable recording medium, and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (transmission and reception device) for performing communication between computers via at least one of a wired network and a wireless network, and is also referred to as, for example, a network device, a network controller, a network card, a communication module, or the like. The communication device 1004 may include a high-frequency switch, a duplexer, a filter, a frequency synthesizer, and the like in order to realize, for example, at least one of frequency division duplex (FDD) and time division duplex (TDD). For example, the transmission and reception antenna, the amplifier unit, the transmission and reception unit, the transmission and reception path interface, and the like may be realized by the communication device 1004. The transmission and reception unit may be physically or logically separated between the transmission unit and the reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs output to the outside. Note that the input device 1005 and the output device 1006 may be integrated (for example, the touch panel).

In addition, the respective devices such as the processor 1001 and the storage device 1002 are connected by the bus 1007 for communicating information. The bus 1007 may be configured using a single bus or may be configured using different buses between the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be realized by the hardware. For example, the processor 1001 may be implemented using at least one of these pieces of hardware.

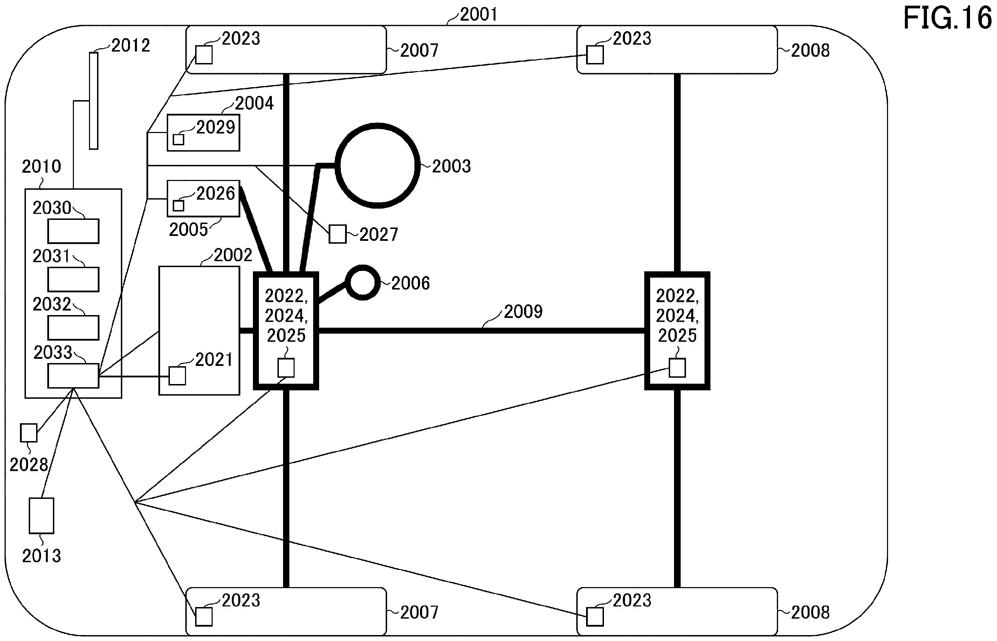

Fig. 16 illustrates a configuration example of a vehicle 2001. As illustrated in Fig. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect and embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a steering wheel), and is configured to steer at least one of the front wheel and the rear wheel based on an operation of the steering wheel operated by the user.

The electronic control unit 2010 includes a microprocessor 2031, a memory (ROM, RAM)2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, and a detection signal for detecting an obstacle, a vehicle, a pedestrian, and the like acquired by the object detection sensor 2028.

The information service unit 2012 includes various devices for providing (outputting) various types of information such as driving information, traffic information, and entertainment information, such as a car navigation system, an audio system, a speaker, a television, and a radio, and one or more ECUs that control these devices. The information service unit 2012 provides various kinds of multimedia information and multimedia services to the occupant of the vehicle 2001 using information acquired from an external device via the communication module 2013 or the like.

The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs output to the outside.

A driving assistance system unit 2030 includes various devices for providing functions for preventing an accident in advance and reducing a driver's driving load, such as a millimeter wave radar, light detection and ranging (LiDAR), a camera, a positioning locator (for example, GNSS or the like), map information (for example, a high definition (HD) map, an automatic driving vehicle (AV) map, and the like), a gyro system (for example, an inertial measurement unit (IMU), an inertial navigation system (INS), or the like), an artificial intelligence (AI) chip, and an AI processor, and one or more ECUs for controlling these devices. The driving assistance system unit 2030 also transmits and receives various types of information via the communication module 2013 to achieve a driving assistance function or an automatic driving function.

The communication module 2013 may communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensor 2021 to 2029 provided in the vehicle 2001 via a communication port 2033.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be either inside or outside the electronic control unit 2010. The external device may be, for example, a base station, a mobile station, or the like.

The communication module 2013 may transmit at least one of signals from the above-described various sensors 2021 to 2029 input to the electronic control unit 2010, information obtained based on the signals, and information based on an input from the outside (user) obtained via the information service unit 2012 to the external device via wireless communication. The electronic control unit 2010, the various sensors 2021 to 2029, the information service unit 2012, and the like may be referred to as input units that receive inputs. For example, the PUSCH transmitted by the communication module 2013 may include information based on the above input.

The communication module 2013 receives various types of information (traffic information, signal information, inter-vehicle information, etc.) transmitted by an external device, and displays the information on the information service unit 2012 provided in the vehicle 2001. The information service unit 2012 may be referred to as an output unit that outputs information (for example, output information to a device such as a display or a speaker based on a PDSCH (or data or information decoded from the PDSCH) received by the communication module 2013).

The communication module 2013 also stores various types of information received from external devices in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensor 2021 to 2029, and the like included in the vehicle 2001 based on the information stored in the memory 2032.

(Supplement to embodiment)

Although the embodiments of the present invention have been described above, the disclosed invention is not limited to such embodiments, and those skilled in the art will understand various modifications, alterations, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be realized by hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to a notification according to the aspects and embodiments described in the present disclosure, and may be performed using other methods. For example, the notification of information may be performed by physical layer signaling (for example, downlink control information (DCI) and uplink control information (UCI)), higher layer signaling (for example, radio resource control (RRC) signaling and medium access control (MAC) signaling), notification information (master information block (MIB), system information block (SIB)), other signals, or a combination thereof. Furthermore, the RRC signaling may be referred to as an RRC message, and may be, for example, an RRC connection setup message, an RRC connection reconfiguration message, or the like.

Each aspect and embodiment described in the present disclosure may be applied to at least one of systems using Long Term Evolution (LTE), LTE-Advanced (LTE-A), SUPER 3G, IMT-Advanced, fourth generation mobile communication system (4G), fifth generation mobile communication system (5G), sixth generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and the next generation system extended, modified, created, and defined based on these systems. Also, a plurality of systems may be applied in combination (for example, a combination of at least one of LTE and LTE-A and 5G, and the like).

The order of the processing procedure, sequence, flowchart, and the like of each aspect and embodiment described in the present specification may be changed as long as there is no contradiction. For example, for the methods described in the present disclosure, elements of various steps are presented using an example order, and are not limited to the particular order presented.

The specific operation described as being performed by the base station 10 in the present specification may be performed by an upper node thereof in some cases. In a network including one or more network nodes having the base station 10, it is obvious that various operations performed for communication with the terminal 20 may be performed by at least one of the base station 10 and other network nodes (for example, MME, S-GW, or the like is conceivable, but is not limited thereto) other than the base station 10. Although the case where the number of other network nodes other than the base station 10 is one has been exemplified above, the other network nodes may be a combination of a plurality of other network nodes (for example, MME and S-GW) .

Information, a signal, or the like described in the present disclosure can be output from an upper layer (or lower layer) to a lower layer (or upper layer). Input and output may be performed via a plurality of network nodes.

The input or output information and the like may be stored in a specific location (for example, memory) or may be managed using a management table. The input and output information and the like can be overwritten, updated, or additionally written. The output information and the like may be deleted. The input information and the like may be transmitted to another device.

The determination in the present disclosure may be made by a value represented by one bit (0 or 1), may be made by a true or false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, in a case where software is transmitted from a website, a server, or another remote source using at least one of a wired technology (a coaxial cable, an optical fiber cable, a twisted pair, a digital subscriber line (DSL), or the like) and a wireless technology (infrared rays, microwaves, etc.), at least one of these wired and wireless technologies is included within the definition of the transmission medium.

The information, signals, and the like described in the present disclosure may be represented using any of a variety of different techniques. For example, data, an instruction, a command, information, a signal, a bit, a symbol, a chip, and the like that may be mentioned throughout the above description may be represented by a voltage, a current, an electromagnetic wave, a magnetic field or a magnetic particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, the wireless resource may be indicated by an index.

The names used for the parameters described above are not limited in any respect. Furthermore, expressions and the like using these parameters may be different from those explicitly disclosed in the present disclosure. Since various channels (for example, PUCCH, PDCCH, and the like) and information elements can be identified by any suitable name, various names allocated to these various channels and information elements are not in any way limitative names.

In the present disclosure, terms such as "base station (BS)", "wireless base station", "base station", "fixed station", "NodeB", "eNodeB (eNB)", "gNodeB (gNB)", "access point", "transmission point", "reception point", "transmission and reception point", "cell", "sector", "cell group", "carrier", and "component carrier" can be used interchangeably. The base station may also be referred to as a macro cell, a small cell, a femtocell, a picocell, or the like.

The base station may accommodate one or more (for example, three) cells. In a case where the base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to part or the entirety of a coverage area of at least one of a base station and a base station subsystem that performs communication service in this coverage.

In the present disclosure, that the base station transmits information to the terminal may be read as that the base station instructs the terminal to perform control and operation based on the information.

In the present disclosure, terms such as a "mobile station (MS)", a "user terminal", a "user equipment (UE)", and a "terminal" can be used interchangeably.

The mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a transmission device, a reception device, a communication device, or the like. Note that at least one of the base station and the mobile station may be a device mounted on the mobile object, a mobile object itself, or the like. The mobile object refers to a movable object, and a moving speed is arbitrary. In addition, a case where the mobile object is stopped is naturally included. The mobile object includes, for example, a vehicle, a transport vehicle, an automobile, a motorcycle, a bicycle, a connected car, an excavator, a bulldozer, a wheel loader, a dump truck, a forklift, a train, a bus, a hand cart, a human-powered vehicle, a ship and other watercraft, an airplane, a rocket, an artificial satellite, a drone (registered trademark), a multicopter, a quadcopter, a balloon, and objects mounted thereon, and is not limited thereto. Further, the mobile object may be a mobile object that autonomously travels based on an operation command. It may be a vehicle (for example, a car, an airplane, or the like), a mobile object moving unmanned (for example, a drone, an automatic driving vehicle, or the like), or a robot (manned type or unmanned type). Note that at least one of the base station and the mobile station includes a device that does not necessarily move during the communication operation. For example, at least one of the base station and the mobile station may be an Internet of Things (IoT) device such as a sensor.

In addition, the base station in the present disclosure may be read as a user terminal. For example, each aspect and embodiment of the present disclosure may be applied to a configuration in which communication between a base station and a user terminal is replaced with communication (for example, it may be referred to as device-to-device (D2D), vehicle-to-everything (V2X), or the like) between a plurality of terminals 20. In this case, the terminal 20 may have the function of the base station 10 described above. In addition, words such as "uplink" and "downlink" may be read as words corresponding to terminal-to-terminal communication (for example, "side"). For example, the uplink channel, the downlink channel, and the like may be replaced with side channels.

Similarly, the user terminal in the present disclosure may be read as a base station. In this case, the base station may have the function of the user terminal described above.

The terms "determining" used in the present disclosure may encompass a wide variety of actions. The terms "determining" may include regarding, for example, judging, calculating, computing, processing, deriving, investigating, searching (looking up, search, inquiry) (for example, searching in a table, a database, or another data structure), and ascertaining as "determining". Furthermore, "determining" may include regarding receiving (for example, receiving information), transmitting (for example, transmitting information), input, output, and accessing (for example, accessing data in a memory) as "determining". In addition, "determining" may include regarding resolving, selecting, choosing, establishing, comparing, and the like as "determining". That is, "determining" may include regarding some operation as "determining". Further, "determining" may be read as "assuming", "expecting", "considering", or the like.

The terms "connected", "coupled", or any variation thereof, mean any direct or indirect connection or coupling between two or more elements, and can include the presence of one or more intermediate elements between two elements that are "connected" or "coupled" to each other. The coupling or connection between the elements may be physical, logical, or a combination thereof. For example, "connection" may be read as "access". As used in this disclosure, two elements can be considered to be "connected" or "coupled" to one another using at least one of one or more wires, cables, printed electrical connections, and as some non-limiting and non-exhaustive examples, using electromagnetic energy having wavelengths in the wireless frequency domain, the microwave domain, and the light (both visible and invisible) domain, and the like.

The reference signal may be abbreviated as a reference signal (RS), or may be referred to as a pilot according to an applied standard.

As used in this disclosure, the description "based on" does not mean "based only on" unless explicitly stated otherwise. In other words, the description "based on" means both "based only on" and "based at least on".

Any reference to elements using names such as "first", "second", and the like as used in the present disclosure does not generally limit the amount or order of those elements. These names may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

Where the present disclosure uses the terms "include", "including", and variations thereof, these terms are intended to be inclusive in a manner similar to the term "comprising". Furthermore, the term "or" used in the present disclosure is intended not to be an exclusive OR.

The wireless frame may include one or more frames in the time domain. One frame or each of a plurality of frames in the time domain may be referred to as a subframe. The subframe may further include one or more slots in the time domain. The subframe may be a fixed time length (for example, 1 ms) that is numerology independent.

The numerology may be a communication parameter applied to at least one of transmission and reception of a signal or channel. The numerology may indicate at least one of, for example, a subcarrier spacing (SCS), a bandwidth, a symbol length, a cyclic prefix length, a transmission time interval (TTI), the number of symbols per TTI, a wireless frame configuration, a particular filtering process performed by the transceiver in the frequency domain, a particular windowing process performed by the transceiver in the time domain, and the like.

The slot may include one or a plurality of symbols (orthogonal frequency division multiplexing (OFDM) symbol, single carrier frequency division multiple access (SC-FDMA) symbol, etc.) in the time domain. The slot may be a time unit based on the numerology.

The slot may include a plurality of mini-slots. Each mini-slot may include one or more symbols in the time domain. Further, the mini-slot may be referred to as a sub-slot. The mini-slot may include a smaller number of symbols than the slot. The PDSCH (or PUSCH) transmitted in a time unit larger than the mini-slot may be referred to as a PDSCH (or PUSCH) mapping type A. The PDSCH (or PUSCH) transmitted using the mini-slot may be referred to as a PDSCH (or PUSCH) mapping type B.

Each of the wireless frame, the subframe, the slot, the mini-slot, and the symbol represents a time unit when a signal is transmitted. Different names corresponding to the wireless frame, the subframe, the slot, the mini-slot, and the symbol may be used.

For example, one subframe may be referred to as a transmission time interval (TTI), a plurality of consecutive subframes may be referred to as a TTI, and one slot or one mini-slot may be referred to as a TTI. That is, at least one of the subframe and the TTI may be a subframe (1 ms) in existing LTE, a period shorter than 1 ms (for example, 1-13 symbols), or a period longer than 1 ms. Note that the unit representing the TTI may be referred to as a slot, a mini-slot, or the like instead of a subframe.

Here, the TTI refers to, for example, a minimum time unit of scheduling in wireless communication. For example, in the LTE system, the base station performs scheduling of allocating a wireless resource (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (transport block), a code block, or a code word, or may be a processing unit such as scheduling or link adaptation. Note that, when a TTI is given, a time interval (for example, the number of symbols) in which a transport block, a code block, a code word, or the like is actually mapped may be shorter than the TTI.

Note that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

The TTI with a time length of 1 ms may be referred to as an ordinary TTI (TTI in LTE Rel.8-12), a normal TTI, a long TTI, an ordinary subframe, a normal subframe, a long subframe, a slot, or the like. A TTI shorter than the ordinary TTI may be referred to as a shortened TTI, a short TTI, a partial TTI (partial or fractional TTI), a shortened subframe, a short subframe, a mini-slot, a sub-slot, a slot, or the like.

Note that, the long TTI (for example, an ordinary TTI, a subframe, or the like) may be read as a TTI having a time length exceeding 1 ms, and the short TTI (for example, a shortened TTI or the like) may be read as a TTI having a TTI length less than the TTI length of the long TTI and equal to or greater than 1 ms.

The resource block (RB) is a resource allocation unit in the time domain and the frequency domain, and may include one or a plurality of consecutive subcarriers in the frequency domain. The number of subcarriers included in the RB may be the same regardless of the numerology, for example, may be 12. The number of subcarriers included in the RB may be determined based on the numerology.

In addition, the time domain of the RB may include one or more symbols, and may be a length of one slot, one mini-slot, one subframe, or one TTI. Each of one TTI, one subframe, and the like may be constituted by one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a wireless resource area of one subcarrier and one symbol.

A bandwidth part (BWP) (which may also be referred to as partial bandwidth or the like) may represent a subset of contiguous common resource blocks (RBs) for a numerology on a carrier. Here, the common RB may be identified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be configured in one carrier for the terminal 20.

At least one of the configured BWPs may be active, and the terminal 20 may not assume that a predetermined signal or channel is transmitted and received outside the active BWPs. Note that "cell", "carrier", and the like in the present disclosure may be read as "BWP".

The above-described structures such as a wireless frame, a subframe, a slot, a mini-slot, and a symbol are merely examples. For example, the configuration such as the number of subframes included in a wireless frame, the number of slots per subframe or wireless frame, the number of mini-slots included in a slot, the number of symbols and RBs included in a slot or mini-slot, the number of subcarriers included in an RB, the number of symbols in a TTI, a symbol length, a cyclic prefix (CP) length, and the like can be variously changed.

In the present disclosure, for example, in a case where articles such as a, an, and the in English are added when translated, the present disclosure may include a noun following these articles being a plural form.

In the present disclosure, the term "A and B are different" may mean "A and B are different from each other". The term may mean that "each of A and B is different from C". The terms such as "leave", "coupled" and the like may also be interpreted in the same manner as "different".

Each aspect and embodiment described in the present disclosure may be used alone, or may be used in combination, or may be used by being switched with execution. Furthermore, notification of predetermined information (for example, notification of "being X") is not limited to being performed explicitly, and may be performed implicitly (for example, the predetermined information is not notified).

Although the present disclosure is described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is for the purpose of exemplification and does not have any restrictive meaning to the present disclosure.

Reference Signs List

| | |
|---|---|
| 10 | base station |
| 110 | transmission unit |
| 120 | reception unit |
| 130 | setting unit |
| 140 | control unit |
| 20 | terminal |
| 210 | transmission unit |
| 220 | reception unit |
| 230 | setting unit |
| 240 | control unit |
| 1001 | processor |
| 1002 | storage device |
| 1003 | auxiliary storage device |
| 1004 | communication device |
| 1005 | input device |
| 1006 | output device |
| 2001 | vehicle |

| 2002 | drive unit |
| 2003 | steering unit |
| 2004 | accelerator pedal |
| 2005 | brake pedal |
| 2006 | shift lever |
| 2007 | front wheel |
| 2008 | rear wheel |
| 2009 | axle |
| 2010 | electronic control unit |
| 2012 | information service unit |
| 2013 | communication module |
| 2021 | current sensor |
| 2022 | rotation speed sensor |
| 2023 | air pressure sensor |
| 2024 | vehicle speed sensor |
| 2025 | acceleration sensor |
| 2026 | brake pedal sensor |
| 2027 | shift lever sensor |
| 2028 | object detection sensor |
| 2029 | accelerator pedal sensor |
| 2030 | driving assistance system unit |
| 2031 | microprocessor |
| 2032 | memory (ROM, RAM) |
| 2033 | communication port (IO port) |

**Claims**

1. A terminal comprising:

   a communication unit configured to perform uplink or downlink communication in a frequency band aggregated by carrier aggregation;
   a reception unit configured to receive a cancelation indication for an uplink signal in downlink; and
   a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

2. The terminal according to claim 1, wherein the control unit is configured to determine a frequency resource area to be canceled for each of the plurality of component carriers or for the unit including the plurality of component carriers.

3. The terminal according to claim 1, wherein the control unit is configured to determine a time resource area to be canceled for each of the plurality of component carriers or for the unit including the plurality of component carriers.

4. A base station comprising:

   a communication unit configured to perform communication with a terminal in a frequency band aggregated by carrier aggregation;
   a transmission unit configured to transmit a cancelation indication for an uplink signal to the terminal; and
   a control unit configured to assume that, in a case where scheduling is performed in a unit including a plurality of component carriers in the aggregated frequency band, the cancelation indication for the uplink signal is transmitted for each of the plurality of component carriers or for the unit including the plurality of component carriers.

5. A communication method executed by a terminal, the method comprising steps of:

   performing uplink or downlink communication in a frequency band aggregated by carrier aggregation;
   receiving a cancelation indication for an uplink signal in downlink; and
   assuming that, in a case where scheduling is performed in a unit including a plurality of component carriers in the aggregated frequency band, the cancelation indication for the uplink signal is transmitted for each of the plurality of component carriers or for the unit including the plurality of component carriers.

# FIG.1

EP 4 514 028 A1

# FIG.2

# FIG.3

# FIG.4

# FIG.5

UL
CI

UL CI applied area

$T'_{proc,\,2}$ symbols
based on PUSCH preparation timeline

$T_{CI}$: timeDurationforCI,
{2, 4, 7}symbols

f

t

# FIG.6

$G_{CI}$ bits

$$\frac{N_{CI}}{G_{CI}} = N_{BI}\ \text{bits}$$

One or more symbols can be contained in each partition

# FIG.7

$G_{CI}$ bits

$\dfrac{N_{CI}}{G_{CI}} = N_{BI}$ bits

2 symbols for each partition

# FIG.8

$\dfrac{N_{CI}}{G_{CI}} = N_{BI}$ bits

1OS

$N_{CI}=56$, $G_{CI}=7$

# FIG.9

$1OS$    $N_{CI}=56$, $G_{CI}=14$

# FIG.10

$1OS$    $N_{CI}=56$, $G_{CI}=28$

# FIG.11

Actual CC#2
($\mu=0$)

Actual CC#1
($\mu=0$)    UL CI

Actual CC#0
($\mu=0$)

f

UL CI
applied area

$>X$    $T_{CI}$: timeDurationforCI

t

# FIG.12

# FIG.13

EP 4 514 028 A1

# FIG.14

# FIG.15

FIG.16

## INTERNATIONAL SEARCH REPORT

| International application No. |
| --- |
| **PCT/JP2022/018627** |

**A.    CLASSIFICATION OF SUBJECT MATTER**

*H04W 72/1268*(2023.01)i; *H04W 72/0457*(2023.01)i; *H04W 72/566*(2023.01)i; *H04W 88/08*(2009.01)i
FI:    H04W72/12 150; H04W72/04 111; H04W72/10; H04W88/08

According to International Patent Classification (IPC) or to both national classification and IPC

**B.    FIELDS SEARCHED**

Minimum documentation searched (classification system followed by classification symbols)

H04W72/12; H04W72/04; H04W72/10; H04W88/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2021/0314924 A1 (QUALCOMM INCORPORATED) 07 October 2021 (2021-10-07) paragraphs [0065]-[0083], fig. 3-4 | 1-5 |
| Y | US 2021/0168783 A1 (APPLE INC.) 03 June 2021 (2021-06-03) paragraphs [0015]-[0050], fig. 1-3 | 1-5 |

☐ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **11 November 2022** | **22 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/018627**

| Patent document cited in search report | | | Publication date (day/month/year) | Patent family member(s) | | | Publication date (day/month/year) |
|---|---|---|---|---|---|---|---|
| US | 2021/0314924 | A1 | 07 October 2021 | WO | 2021/202551 | A1 | |
| US | 2021/0168783 | A1 | 03 June 2021 | WO | 2020/033660 | A1 | |
| | | | | CN | 112514501 | A | |

Form PCT/ISA/210 (patent family annex) (January 2015)

**EP 4 514 028 A1**

**REFERENCES CITED IN THE DESCRIPTION**

**Non-patent literature cited in the description**

- *3GPP TS 38.300 V16.8.0*, December 2021